# EUROPEAN PATENT APPLICATION

(11) **EP 2 213 515 A1**
(43) Date of publication of application: **04.08.2010**
(21) Application number: 09151777.1
(22) Date of filing: 30.01.2009
(51) Int. Cl.: B60R 9/06

(54) **Coupling device**

(71) Applicant: Thule Sweden AB, 330 33 Hillerstorp (SE)
(72) Inventor: Lundgren, Anders, 514 70, Grimsas (SE); Nilvius, Anders, 331 35, Varnamo (SE)
(74) Representative: VALEA AB

(57) **Abstract**

A coupling device (1) for coupling a load carrier to a towing hook (2) of a vehicle, which device comprises, a first coupling element (4) adapted to abut against a first portion of the towing hook (2) and a second coupling element adapted to abut a second portion of the towing hook (2). A frame (10) is arranged to accommodate at least the first portion of the towing hook (2) and a transfer linkage (12) for effecting displacement of the first coupling element (4) with respect to the frame (10). The first coupling element (4) is movably connected to the frame (10) and is associated with an end of the transfer linkage (12). The transfer linkage (12) comprises a first two-bar linkage (22) and a second two-bar linkage. The first and second two-bar linkages (22) are arranged in relation to each other such that when a force is applied to the second two-bar linkage the force is transferred via the first two-bar linkage (22) to the first coupling element (4) via the said end of the transfer linkage (12) for releasing or engaging the towing hook (2). A load carrier and use of a load carrier are also presented.

## Description

### TECHNICAL FIELD

The present invention relates to a coupling device for coupling a load carrier to a towing hook of a vehicle, a load carrier comprising such a coupling device as well as use of a coupling device for securing a load carrier to a towing hook of a vehicle.

### BACKGROUND OF THE INVENTION

Load carriers for carrying various devices on a towing hook of a vehicle are generally known. Such load carriers may be of different kinds adapted for carrying specific objects, such as bicycles, luggage, skis, golf bags, wheelchairs, prams etc. For the purpose of coupling such a load carrier to a towing hook, the load carrier is provided with a coupling device.

It is important that the load carrier is firmly attached to the vehicle. The coupling device of the load carrier is a primary attachment point of the load carrier to the vehicle and as such must provide a stable and safe coupling to the towing hook. It is furthermore desired that the load carrier is quick and easy to install on, and remove from, the vehicle.

DE10155232 discloses a coupling device for a load carrier. The coupling device comprises a fixed and a movable coupling element arranged in a frame and adapted to engage a ball portion of a towing hook. By means of a lever and a mechanism the movable coupling element is moved to engage and release the towing hook. To hold the lever in a closed position, there is provided a clamp, which is movable along the lever. Both the lever and the clamp must be actuated when the coupling device is to be attached, or removed from, the towing hook.

### SUMMARY OF THE INVENTION

An object of the present invention is to provide a coupling device for a load carrier, which device is easily attached to a towing hook of a vehicle and easily removed from the towing hook.

According to an aspect of the invention, the object is achieved by a coupling device for coupling a load carrier to a towing hook of a vehicle, which device comprises, a first coupling element adapted to abut against a first portion of the towing hook and a second coupling element adapted to abut a second portion of the towing hook. The coupling device further comprises a frame arranged to accommodate at least the first portion of the towing hook and a transfer linkage for effecting displacement of the first coupling element with respect to the frame. The first coupling element is movably connected to the frame and is associated with an end of the transfer linkage. In the coupling device the transfer linkage comprises a first two-bar linkage and a second two-bar linkage. The first and second two-bar linkages are arranged in relation to each other such that when a force is applied to the second two-bar linkage the force is transferred via the first two-bar linkage to the first coupling element via the said end of the transfer linkage for releasing or engaging the towing hook.

Since the coupling device can be engaged with a towing hook with the application of one single force, the coupling device is easily attached to the towing hook. A quick attachment and a quick release with one respective single motion is possible.

As a result, the above mentioned object is achieved.

A further advantage of the transfer linkage comprising two two-bar linkages is that the force required to engage the towing hook is smaller than in the prior art.

According to example embodiments the movable connection of the first coupling element to the frame of the coupling device may comprise a pivoting connection or a sliding connection or a combination thereof. The second coupling element may be fixedly connected to the frame or may form part of the frame. Alternatively, the second coupling element may be movably connected to the frame.

In example embodiments the first two-bar linkage may comprise a first and a second link bar connected by a common joint and the first link bar may be connected to the first coupling element via the said end of the transfer linkage. The second two-bar linkage may comprise a third and a fourth link bar connected by a collective joint. The third link bar may be connected to the first two-bar linkage at a connection point and the fourth link bar may be connected to the frame by means of an axle connection. The connection point is suitably closer to the common joint of the first two-bar linkage than any opposite ends of the first or second link bars. The two two-bar linkages being connected in this manner provide a high clamping force on the first coupling element. The connection point may be constituted by the common joint of the first two-bar linkage.

According to example embodiments the coupling device may comprise an adjustment arrangement for directly or indirectly adjusting the first two-bar linkage in relation to the frame and/or the towing hook. By adjusting the first two-bar linkage a clamping force of the first and/or second coupling elements against the towing hook may be adjusted such that the coupling device is securely attached to the towing hook. Adjustment of the first two-bar linkage may for instance be performed after an initial period of using the coupling device when wear of parts of the coupling device might have reduced the clamping force. The adjustment of the first two-bar linkage may be made when the coupling device is engaged with a towing hook or when it is released. The adjustment arrangement may comprise an adjustable frame joint, which connects the second link bar to the frame. The frame joint may comprise a threaded bolt, which is adjustable by means of one or more threaded nuts or by means of a threaded insert in the frame. Alternatively, an automatic adjustment of the frame joint may be achieved by means of a spring, e.g. one or more cup springs, arranged between the frame joint and the frame to provide a pressure against the first coupling element when it is engaged with the towing hook.

According to example embodiments the coupling device may comprises a lever adapted for application of the said force and which lever is associated with an end of the second two-bar linkage. A lever is an easy to use device for applying the force and only one single motion of the lever may be required to engage or release the towing hook. In combination with the two two-bar linkages, a shorter lever than in the prior art can be used for applying the said force. Also a shorter movement from an engaged position to a released position is possible. This means that a remainder of a travelling path of the lever can be utilized for increasing the distance between the first and second coupling elements to facilitate removal of the coupling device from the towing hook. Part of the lever may constitute the fourth link bar. Suitably a part of the lever extending between the axle connection and the collective joint of the second two-bar linkage may constitute the fourth link bar. In this way the lever and the second two-way linkage form one part for easy application of the force.

In example embodiments the third and fourth link bars may be connected by means of a collective joint and the fourth link bar may comprise an extending portion extending from the axle connection at an end opposite from the collective joint. The extending portion may for instance comprise the lever, as mentioned above, or simply a short bar. The second two-bar linkage may have a self-locking position, in which the coupling device is in a steady closed state, when the collective joint is positioned on one side of a straight line extending between the axle connection and the said connection point of the two-bar linkage to the first two-bar linkage and the extending portion abuts against a stop part fixed in relation to the frame. The stop part may e.g. be a part of the frame or a dedicated bolt or rivet. The self-locking position of the two-bar linkage makes sure that the coupling device may be securely attached to the towing hook without the need for any separate arrangement for preventing unwanted releasing of the coupling device.

According to example embodiments the first and second coupling elements may be adapted to engage a ball portion of the towing hook and/or a neck portion of the towing hook. In order to provide a firm grip between the towing hook and the coupling device the first and second coupling elements may be at least partially covered by a friction covering adapted to abut the towing hook. Such friction covering may also provide a distinct feeling when the coupling device is engaged or released from the towing hook.

In example embodiments the coupling device may comprise a lock for preventing manipulation of the transfer linkage. Such a lock will ensure that the coupling device and any attached load carrier cannot be stolen from the vehicle to which it is attached. Suitably the lock may be adapted to engage the lever with the frame.

According to a further aspect of the invention, a load carrier is provided comprising a coupling device as discussed above also with reference to the example embodiments above.

A further aspect of the invention is use of a coupling device according to the discussion above to releasably secure a load carrier to a towing hook of a vehicle. Such a load carrier may be adapted to carry a device for example selected from a list of: bicycle, luggage, ski, golf bag, wheelchair and pram.

Further features of, and advantages with, the present invention will become apparent when studying the appended claims and the following description. Those skilled in the art realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Figs. 1 - 3 illustrate a coupling device according to example embodiments in an open position, in an intermediate position and in a closed position, respectively,
Fig. 4 illustrates a part of a coupling device with a locking arrangement according to example embodiments,
Fig. 5 illustrates schematically a part of a coupling device according to example embodiments in a closed position,
Fig. 6 illustrates schematically a part of a coupling device according to example embodiments in a closed position, and
Fig 7 illustrates a load carrier according to example embodiments provided with a coupling device according to example embodiments.

### DETAILED DESCRIPTION OF EXAMPLE EMBODIMENTS

The present invention now will be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

As used herein, the term "comprising" or "comprises" is open-ended, and includes one or more stated features, elements, steps, components or functions but does not preclude the presence or addition of one or more other features, elements, steps, components, functions or groups thereof.

As used herein, the term "and/or" includes any and all combinations of one or more of the associated listed items.

As used herein, the common abbreviation "e.g.", which derives from the Latin phrase "exempli gratia," may be used to introduce or specify a general example or examples of a previously mentioned item, and is not intended to be limiting of such item. If used herein, the common abbreviation "*i*.*e*.", which derives from the Latin phrase "id est," may be used to specify a particular item from a more general recitation.

The terminology used herein is for the purpose of describing particular embodiments only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present.

Well-known functions or constructions may not be described in detail for brevity and/or clarity.

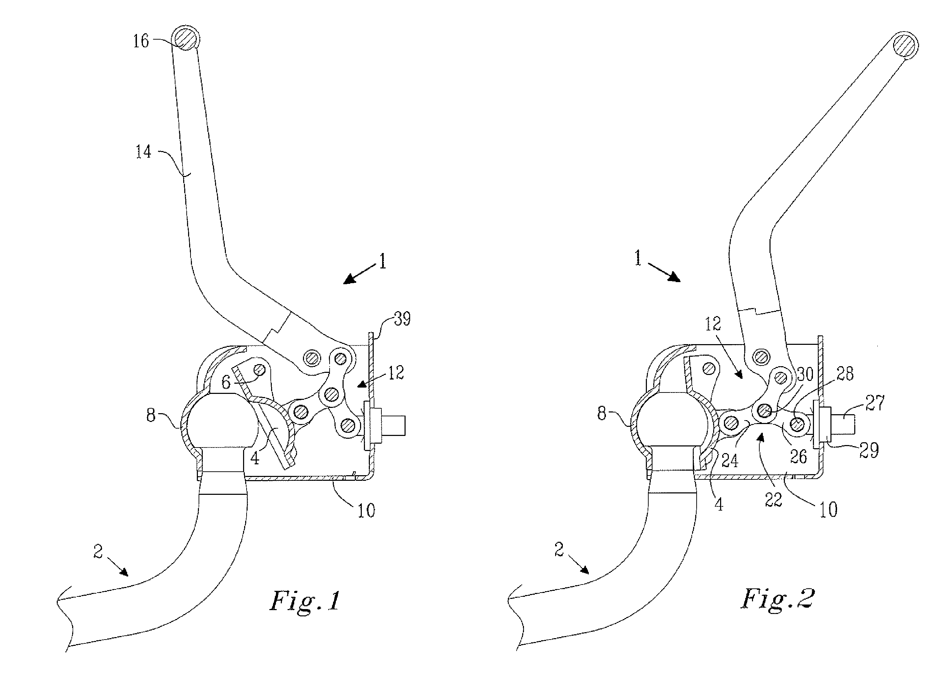

Fig. 1 illustrates a coupling device generally denoted 1 according to example embodiments. The coupling device 1 is shown in an open position with a towing hook 2 inserted in the coupling device 1. A first coupling element 4 is arranged to pivot about an axis 6 suitably connected to a frame 10 of the coupling device 1. A second coupling element 8 forms part of the frame 10 of the coupling device 1. The first coupling element 4 is connected to one end of a transfer linkage 12. A lever 14, provided with a handle 16, is connected to an other end of the transfer linkage 12. When the lever 14 is in the shown upright position, the transfer linkage 12 has pivoted the first coupling element 4 into the shown open position, in which the towing hook 2 may be inserted or extracted from the coupling device 1. The first and second coupling elements 4, 8 may have spherical surface portions to abut parts of a ball portion of the towing hook 2. The first and second coupling elements 4, 8 each abut a respective portion of the towing hook 2.

Fig. 2 illustrates the coupling device 1 according to Fig. 1 in an intermediate position when the first coupling element 4 is about to engage or release the towing hook 2. The transfer linkage 12 comprises a first two-bar linkage 22, including a first link bar 24 and a second link bar 26. The first link bar 24 is at an end pivotally connected with the first coupling element 4 and the second link bar 26 is pivotally connected to the frame 10 by means of a frame joint 28. The first and second link bars 24, 26 are pivotally connect by means of a common joint 30. The frame joint 28 is suitably laterally adjustable in relation to the frame 10 by means of a bolt 27 and a threaded insert 29 arranged in the frame 10. A non-shown ratchet mechanism may be provided for a stepwise adjustment of the frame joint 28.

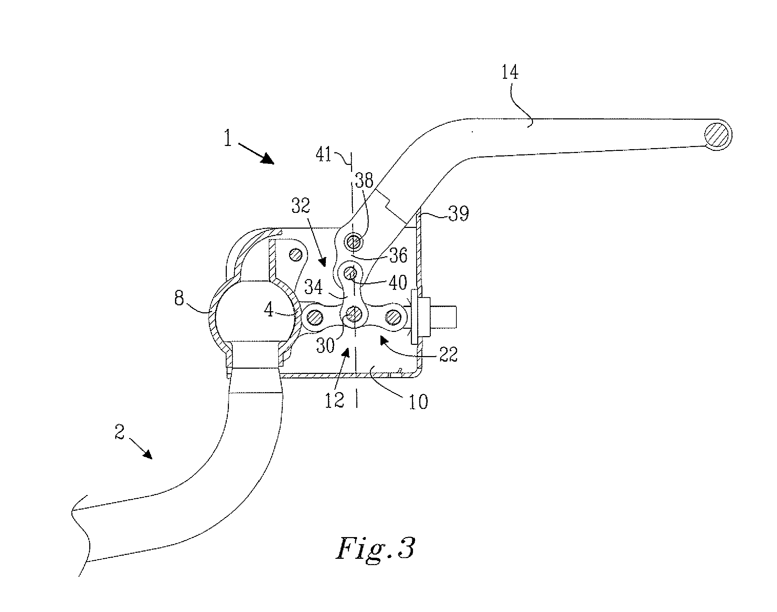

Fig. 3 illustrates the coupling device 1 according to Figs. 1 and 2 in a closed position with the first and second coupling elements 4, 8 safely engaging a ball portion of the towing hook 2. The transfer linkage 12 further comprises a second two-bar linkage 32 including a third link bar 34 and a fourth link bar 36. The third link bar 34 is at an end pivotally connected with the common joint 30 of the first two-bar linkage. The fourth link bar 36 is pivotally connected to the frame 10 by means of an axle 38 forming an axle connection. A part of the lever 14 on the other side of the axle 38 forms the fourth link bar 36. The third and fourth link bars 34, 36 are pivotally connect by means of a collective joint 40.

As can be readily understood from Figs. 1 to 3, the transfer linkage 12 transfers an applied force from the lever 14 to the first coupling element 4. The force is transferred via the second two-bar linkage 32 to the common joint 30 of the first two-bar linkage 22, which is moved from the folded position shown in Fig. 1 towards a more extended end position. In Fig. 2 the lever 14 has been moved to a position such that the first two-bar linkage 22 has been unfolded to about half-way its end position and the first coupling element 4 has reached a position, in which it is about to engage the towing hook 2. In Fig. 3 the lever 14 has reached an end position by abutment against a stop part 39 of the frame 10 and the first two-bar linkage 22 has reached its end position such that the towing hook 2 is firmly engaged between the first and second coupling elements 4, 8.

The second two-bar linkage 32 has a self-locking position, which is reached when the lever 14 has arrived at the position shown in Fig. 3. When the second two-bar linkage is in the self-locking position, the coupling device 1 is in a steady closed state because the lever 14 cannot move the second two-bar linkage 32 from this position without the application of a certain force. In detail:
- the first two-bar linkage 22 has reached a position, in which the first coupling element 4 abuts against the towing hook 2,
- the first two-bar linkage 22 is in its end position, in which it constitutes a resilient stop element for the second two-bar linkage 32,
- the second two-bar linkage 32, during movement of the lever 14 from the position shown in Fig. 1, has passed from a folded position with the collective joint 40 on one side of a straight line 41 extending between the axle 38 and the common joint 30, to a straight position along the straight line 41, and further to a folded position with the collective joint 40 on an opposite side of the straight line 41,
- a force has been needed to overcome a resilience, e.g. of the stop element formed by the first two-bar linkage 22, to make the collective joint 40 of the second two-bar linkage 32 pass the straight line 41, due to the distance between the axle 38 and common joint 30 of the first two-bar linkage 22 in its end position being shorter than the second two-bar linkage 32,
- the lever 14 abuts the stop part 39 of the frame 10 preventing further movement of the lever 14 in the direction of the stop part 39, and
- a force is needed to overcome the resilience of the stop element formed by the first two-bar linkage 22 to move the lever 14 back towards the positions shown in Figs. 1 and 2.

In Figs. 1 and 2 the collective joint 40 is on the right side of the straight line 41 and the lever 14 is movable by application of a force. In order to make the collective joint 40 of the second two-bar linkage 32 pass to the left of the straight line 41 the force applied to the lever 14 must be increased. Once the collective joint 40 has passed the straight line 41, the steady state has been reached.

According to example embodiments the frame 10 may have a certain elasticity. The frame 10 may for instance give 0,1 - 2 mm or more specifically 0,4 - 1,0 mm or even more specifically 0,6 - 0,7 mm when a clamping force of 10.000 - 50.000 N or more specifically 30.000 N is applied to the two coupling elements 4, 8. This elasticity may provide an advantage when engaging and releasing a towing hook. A lever of the coupling device for applying the force will have an agreeable not too rigid feeling to it. Also the coupling device will be less subjective to material fatigue.

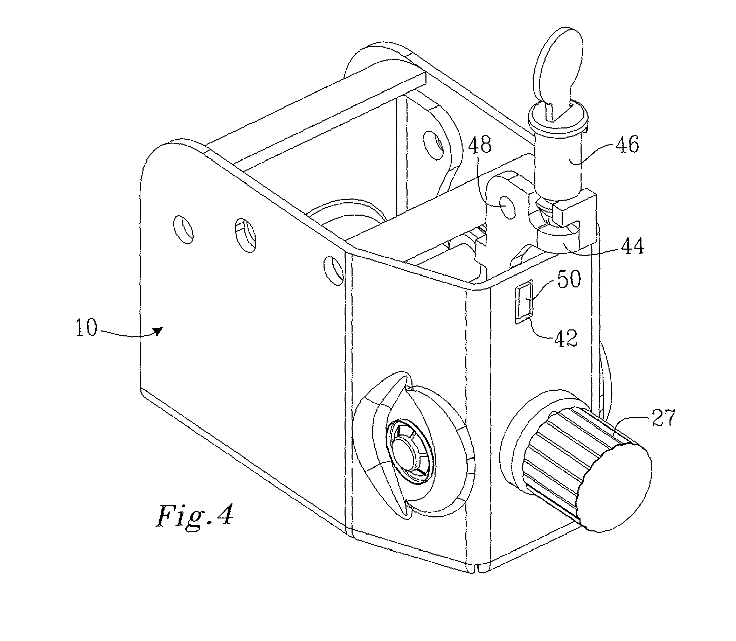

Fig. 4 illustrates a part of a coupling device 1 with a locking arrangement for preventing unwanted manipulation of a lever according to example embodiments. The frame 10 of the coupling device 1 is provided with an opening 42. A non-shown lever is provided with an engagement part 44 and a lock cylinder 46 of the locking arrangement. The engagement part 44 can at least partially pivot about an axis extending through an axis hole 48 such that a protrusion 50 of the engagement part 44 can be moved in and out of the opening 42 of the frame 10. The lock cylinder 46 can be turned about its longitudinal axis. In one position of the lock cylinder 46 the engagement part 44 can pivot about the axis extending through the axis hole 48. In a different position of the lock cylinder 46 the engagement part 44 is prevented from pivoting about said axis. When the engagement part 44 is prevented from pivoting with the protrusion 50 positioned in the opening 42, the non-shown lever is prevented from being moved, suitably when it is engaged with a towing hook of a vehicle. If the lock cylinder 46 has a locking function e.g. with a key, the lever can be locked to the frame of the coupling device 1 and thus the entire coupling device 1 can be locked to the towing hook to prevent theft. A knob of a bolt 27 of an adjustment arrangement is arranged at an outer surface of the frame 10 for easy access when adjustment of a two-bar linkage inside the frame 10 is required.

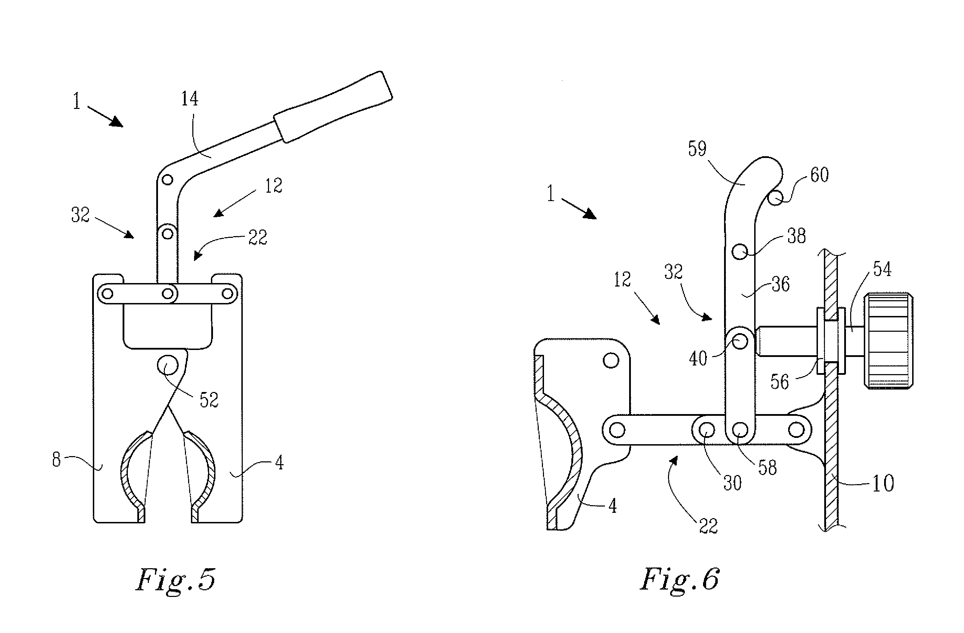

Fig. 5 illustrates schematically a part of a coupling device 1 according to example embodiments in a closed position. A first and a second coupling element 4, 8 for engaging a towing hook of a vehicle are arranged to pivot about a common axis extending through a pivot joint 52, which suitably is fixed in a non-shown frame of the coupling device 1. The two coupling elements 4, 8 are movable in relation to each other and the non-shown frame by means of a transfer linkage 12 comprising a first and a second two-bar linkage 22, 32. One link bar of the second transfer linkage is connected with a lever 14. When the lever 14 is moved in one direction, the transfer linkage 12 transfers the movement of the lever 14 to the coupling elements 4, 8 to arrive in the position shown in Fig. 5 for engaging a towing hook. When the lever 14 is moved in the other direction, the first and second coupling elements 4, 8 are opened to release the towing hook.

Fig. 6 illustrates schematically a part of a coupling device 1 according to example embodiments in a closed position. A first coupling element 4 adapted to cooperate with a non-shown fixed second coupling element for engaging a towing hook is connected to a transfer linkage 12. The transfer linkage 12 comprises a first and a second two-bar linkage 22, 32. A force is applied to the second two-bar linkage 32 by means of a threaded bolt 54, which can be moved back and fourth in a threaded insert 56 of a frame 10 of the coupling device 1. When the threaded bolt 54 is moved against the second two-bar linkage 32, suitably in the area of its collective joint 40, the second two-bar linkage 32 performs a movement from a folded position towards an essentially straight position, shown in Fig. 6, and its movement is transferred via the first two-bar linkage 22 to the first coupling element 4 to engage the towing hook. The second two-bar linkage 32 is pivotally connected to the first two-bar linkage 22 at a connection position 58 different from a common joint 30 of the first two-bar linkage 22. A link bar 36 of the second two-bar linkage 32 has an extended portion 59 extending beyond an axle 38 fixed to the frame 10 to abut against a stop part in the form of a stop pin 60 attached to the frame 10 when the second two-bar linkage 32 is in its essentially straight position. Since the stop pin 60 is attached to the frame 10 it is fixed in relation to the frame 10. In this position, with the threaded bolt 54 abutting the second two-bar linkage and the extended portion 59 abutting the stop pin 60 the coupling device 1 is in a steady closed state.

A non-shown connection between the threaded bolt 54 and the second two-bar linkage 32 will ensure that the second two-bar linkage 32 is moved into a folded position when the threaded bolt 54 is moved in a direction away from the second two-bar linkage 32. In this way the first coupling element 4 is moved away from an engaged towing hook to release the same.

It is also possible to provide a self-locking function of the second two-bar linkage 32 as described above in relation to the disclosure of Fig. 3. The first two-bar linkage 22 would have to provide the same resilience in its end position as mentioned above. Instead of a lever abutting a stop part of the frame, the extended portion 59 will abut the stop part in the form of a stop pin 60 and the second two-bar linkage must be attached and designed such that application of a force is need to make its collective joint 40 pass from one side of a straight line to an other side of the straight line.

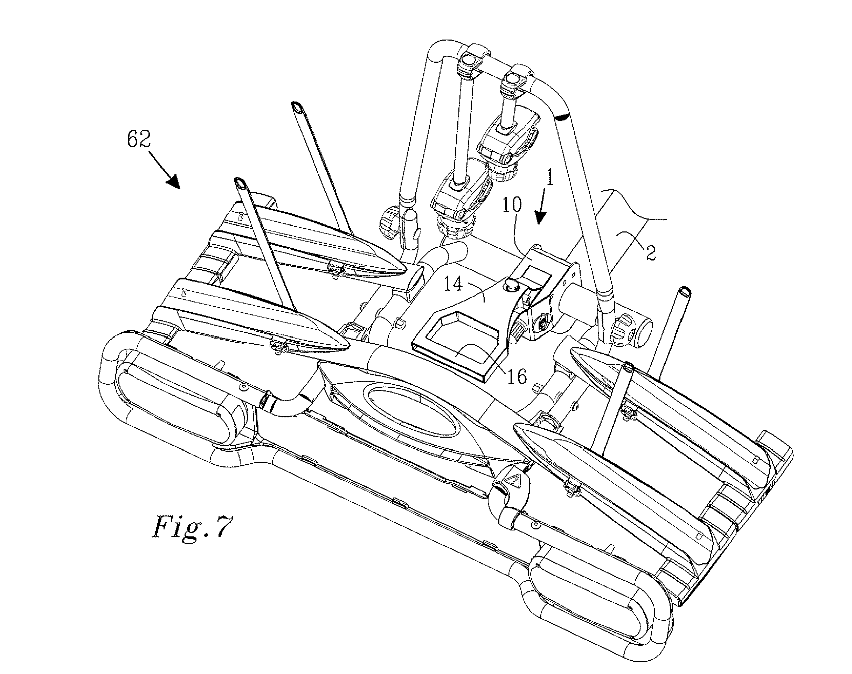

Fig 7 illustrates a load carrier according to example embodiments provided with a coupling device 1 according to example embodiments for coupling the load carrier to a towing hook of a vehicle. To a frame 10 of the coupling device 1 a frame structure 62 of the load carrier is attached. The frame structure 62 is adapted to carry two bicycles. By means of a lever 14 provided with a handle 16, at least one coupling element of the coupling device 1 is manipulated to engage or release the towing hook.

Example embodiments of coupling devices as described above may be used to releasably secure a load carrier to a towing hook of a vehicle. The load carrier may be adapted to carry one or more bicycles, pieces of luggage, skis, golf bags, wheelchairs and/or prams.

Different features of the example embodiments may be combined as understood by a person skilled in the art. Even though the invention has been described with reference to example embodiments, many different alterations, modifications and the like will become apparent for those skilled in the art. The transfer linkage of the coupling device may for instance comprise more than two two-bar linkages. The lever may be a separate part connected to the second two-bar linkage. The coupling device and load carrier and their incorporated parts may be made from same or different materials such as steel aluminium composites and plastics.

Therefore, it is to be understood that the foregoing is illustrative of various example embodiments and is not to be limited to the specific embodiments disclosed and that modifications to the disclosed embodiments, combinations of features of disclosed embodiments as well as other embodiments are intended to be included within the scope of the appended claims.

## Claims

1. A coupling device (1) for coupling a load carrier to a towing hook (2) of a vehicle, which device comprises, a first coupling element (4) adapted to abut against a first portion of said towing hook (2), a second coupling element (8) adapted to abut a second portion of said towing hook (2), a frame (10) arranged to accommodate at least said first portion of said towing hook (2) and a transfer linkage (12) for effecting displacement of said first coupling element (4) with respect to said frame (10), wherein said first coupling element (4) is movably connected to said frame (10) and is associated with an end of said transfer linkage (12)
**characterized in that**
said transfer linkage (12) comprises a first two-bar linkage (22) and a second two-bar linkage (32), wherein said first and second two-bar linkages (22, 32) are arranged in relation to each other such that when a force is applied to said second two-bar linkage (32) said force is transferred via said first two-bar linkage (22) to said first coupling element (4) via said end of said transfer linkage (12) for releasing or engaging said towing hook (2).

2. The coupling device (1) according to claim 1, wherein said second coupling element (8) is fixedly connected to said frame (10) or forms part of said frame (10).

3. The coupling device (1) according to claim 1, wherein said second coupling element (8) is movably connected to said frame (10).

4. The coupling device (1) according to any one of the preceding claims, wherein said first two-bar linkage (22) comprises a first and a second link bar (24, 26) connected by a common joint (30) and wherein said first link bar (24) is connected to said first coupling element (4) via said end of said transfer linkage (12).

5. The coupling device (1) according to any one of the preceding claims, wherein said second two-bar linkage (32) comprises a third and a fourth link bar (34, 36) and said third link bar (34) is connected to said first two-bar linkage (22) at a connection point (30; 58) and said fourth link bar (36) is connected to said frame (10) by means of an axle connection (38).

6. The coupling device (1) according to claims 4 and 5, wherein said connection point is constituted by said common joint (30) of said first two-bar linkage (22).

7. The coupling device (1) according to any one of the preceding claims, wherein the device further comprises an adjustment arrangement for directly or indirectly adjusting said first two-bar linkage (22) in relation to said frame (10) and/or said towing hook (2).

8. The coupling device (1) according to claim 7, wherein said adjustment arrangement comprises an adjustable frame joint (28), which connects said second link bar (26) to said frame (10).

9. The coupling device (1) according to any one of the preceding claims, wherein the device further comprises a lever (14) adapted for application of said force and which lever (14) is associated with an end of said second two-bar linkage (32).

10. The coupling device (1) according to claim 9, wherein part of said lever (14) constitutes said fourth link bar (36).

11. The coupling device (1) according to any one of claims 5 - 10, wherein said third and fourth link bars (34, 36) are connected by a collective joint (40) and said fourth link bar (36) comprises an extending portion extending from said axle connection (38) at an end opposite from said collective joint (40), and wherein said second two-bar linkage (32) has a self-locking position, in which the coupling device (1) is in a steady closed state, when said collective joint (40) is positioned on one side of a straight line (41) extending between said axle connection (38) and said connection point (30; 58) and said extending portion abuts against a stop part (39; 60) fixed in relation to said frame (10).

12. The coupling device (1) according to any one of the preceding claims, wherein said first and second coupling elements (4, 8) are adapted to engage a ball portion of said towing hook (2) and/or a neck portion of said towing hook (2).

13. A load carrier comprising a coupling device 1 according to any one of the preceding claims.

14. Use of a coupling device (1) according to any one of claims 1 - 15 to releasably secure a load carrier (62) to a towing hook (2) of a vehicle.

15. Use of a coupling device (1) according to claim 17, wherein the load carrier (62) is adapted to carry a device selected from a list of: bicycle, luggage, ski, golf bag, wheelchair and pram.
